# FASCICULE DE BREVET EUROPEEN

(11) **EP 1 937 067 B1**
(45) Date de publication et mention de la délivrance du brevet: **13.05.2009**
(21) Numéro de dépôt: 06820241.5
(22) Date de dépôt: 19.10.2006
(51) Int. Cl.: A01N 43/16, A01N 63/02, A01N 63/00

(54) **UTILISATION D'UN AGENT STIMULANT LE SYSTEME DEFENSIF DE PLANTES ET PROCEDE POUR SA MISE EN OEUVRE**
VERWENDUNG EINES WIRKSTOFFS ZUR STIMULIERUNG DES ABWEHRSYSTEMS VON PFLANZEN UND HERSTELLUNG DAVON
USE OF AN AGENT FOR STIMULATING THE DEFENSE SYSTEM OF PLANTS AND PRODUCTION THEREOF

(30) Priorité: 19.10.2005 FR 0510633
(43) Date de publication de la demande: 02.07.2008
(73) Titulaire: Université de Reims Champagne Ardenne (U.R.C.A.), 51100 Reims (FR)
(72) Inventeur: DOREY, Stéphan, F-51100 Reims (FR); BAILLIEUL, Fabienne, F-08190 Roizy (FR); CLEMENT, Christophe, F-08190 Roizy (FR); VARNIER, Anne-Lise, F-51100 Reims (FR); TERGANIER, Malk, F-51100 Reims (FR)
(74) Mandataire: Hammond, William
(86) Numéro de dépôt international: PCT/FR2006/002353
(87) Numéro de publication internationale: WO 2007/045767

(56) Documents cités:
- WO-A-97/25866
- STANGHELLINI M E ET AL: "BIosurfactants - their identity and potential efficacy in the biological control of zoosporic plant pathogen" PLANT DISEASE, AMERICAN PHYTOPATHOLOGICAL SOCIETY, ST. PAUL, MN, US, vol. 81, no. 1, 1997, pages 4-12, XP000671507 ISSN: 0191-2917
- BEOM SEOK K. ET AL.: PEST MANAGMNET SCI, vol. 56, 2000, pages 1029-1035, XP002391735 cité dans la demande
- HABA, E. ET AL.: BIOTECHNOLOGY AND BIOENGINEERING, vol. 81, no. 3, 5 février 2003 (2003-02-05), pages 316-322, XP002391736
- ÖZDEMIR G. ET AL.: COLLOIDS AND SURFACES B: BIOINTERFACES, vol. 39, 2004, pages 1-7, XP002391737

## Description

La présente invention est relative à l'utilisation d'un agent pour stimuler les réactions de défense naturelle de plantes et à un procédé pour mettre en oeuvre un tel agent.

Depuis quelques années, il a été montré que les plantes possèdent des mécanismes de protection de deux ordres : en premier lieu des moyens de protection préexistants tels que la présence de couches externes rigides comme la cuticule bloquant l'entrée des agents contaminants qui ne peuvent donc pénétrer dans la plante que par des blessures ou des pores naturels, ou tels que des composés antimicrobiens stockés notamment dans des vacuoles ; et en second lieu, des réactions induites destinées à protéger la plante. Ces réactions conduisent à la production d'antibiotiques végétaux, les phytoalexines, de protéines de défense, les PR-protéines, et de composés destinés à renforcer les parois des cellules végétales. De plus, les cellules infectées sont capables de prévenir leurs voisines du danger et seront aptes à réagir immédiatement aux attaques ultérieures. Ces réactions peuvent être provoquées par des molécules appelées éliciteurs, issues de la plante ou de microorganismes (pathogènes ou non). Les éliciteurs isolés, mis au contact d'une plante, sont capables de stimuler dans celle-ci les mêmes réactions de défense que celles que développe la plante quand elle est attaquée par un agent pathogène.

Par le terme "stimuler", il faut comprendre aussi bien "déclencher", que "promouvoir" ou que "augmenter". Il en est de même pour les substantifs correspondants.

Si l'on met une plante en contact avec un éliciteur capable d'activer les défenses naturelles de celle-ci avant qu'elle ne soit entrée en contact avec l'agent pathogène, cette plante sera mieux protégée voir immunisée contre la maladie provoquée par cet agent.

Comme on aura pu le comprendre, l'utilisation d'éliciteurs présente un grand nombre d'avantages : en premier lieu, celui de respecter l'environnement puisque l'utilisation de pesticides pourra être réduite voir même abolie ; et, en second lieu, l'utilisation d'éliciteurs permet d'activer le système de défense de la plante, et par conséquent est efficace contre un grand nombre de microorganismes pathogènes.

Parmi les plantes susceptibles d'être mises en contact avec des agents éliciteurs, on citera notamment la vigne, le tabac et l'arabette. Cette dernière est tout particulièrement intéressante car elle est une plante modèle pour les biologistes moléculaires.

Aussi un des buts de la présente invention est-il d'utiliser un agent stimulant le système défensif d'une plante afin de lui permettre de mieux lutter contre des microorganismes pathogènes.

Ce but, ainsi que d'autres qui apparaîtront par la suite, sont atteints par l'utilisation de rhamnolipides R1 et/ou R2 en tant qu'agent de stimulation des réactions de défense naturelles des plantes.

La présente invention concerne aussi un procédé pour stimuler des réactions de défense naturelles des plantes, caractérisé par le fait que l'on applique sur les plantes à traiter une composition aqueuse comportant une concentration d'au moins 0,01% (v/v) de rhamnolipides R1 et/ou R2.

De préférence, on applique sur les plantes à traiter une composition aqueuse comportant une concentration d'au moins 0,1% (v/v) de rhamnolipides R1 et/ou R2.

Les rhamnolipides sont des glycolipides comprenant une chaîne d'acide gras couplée avec un (R1) ou deux (R2) rhamnoses dans la partie carboxy terminale de la chaîne d'acide gras. Un rhamnolipide R1 ou RLL est un ester d'acide décanoïque et de 3-[(6-déoxy- -L-mannopyranosyl)oxy]-, 1-(carboxyméthyl)octyl ; un rhamnolipide R2 ou RRLL est un ester d'acide décanoïque et de 3-{[(6-déoxy-2-O-(6-déoxy- -L-mannopyranosyl)- -L-mannopyranosyl]oxy}-, 1-(carboxyméthyl)octyl.

Ce sont des molécules très stables qui sont utilisées en tant qu'agents mouillants, émulsifiants, adjuvants pour des herbicides et pesticides. Elles sont aussi utilisées pour détoxiquer les sols, en particulier dans le cadre de la dépollution en hydrocarbures et métaux lourds. De plus, les rhamnolipides R1 et R2 ne sont pas toxiques pour l'homme : ils sont d'ailleurs utilisés comme additifs pour certains produits alimentaires. On utilise en particulier des biosurfactants tels que ceux de la famille des rhamnolipides en tant que biofongicides pour lutter contre les champignons à zoospores.

Les rhamnolipides sont isolés à partir de la bactérie *Pseudomonas aeruginosa*. L'obtention des rhamnolipides et les utilisations énumérées ci-dessus sont en particulier décrits dans les documents suivants : Langmuir (2001) 17, 1367-1371; Pest Manag. Sci. (2000) 56, 1029-1035; Appl. Microbiol. Biotechnol. (2000) 54, 625-633 WO 97/25866A, Biotechn. and Bioengin. (2003), 81(3), 316-322, Colloids and Surfaces (2004), 39, 1-7, Plant Disease (1997), 81(1), 4-12. Les rhamnolipides R1 et R2 sont en particulier commercialisés sous la forme de solutions telles que la solution JBR215 par la société Jeneil biosurfactant co., Ilc (400 N. Dekora Woods Blvd. Saukville, WI 53080).

La limite supérieure de la concentration en rhamnolipides R1 et/ou R2 des compositions mises en oeuvre conformément à l'invention n'est pas donnée comme critique ; mais, dans la pratique, une concentration supérieure à 0,1% (v/v) n'apporte aucun bénéfice supplémentaire.

Dans le cadre de la présente invention, on a examiné la stimulation des réactions de défense naturelles obtenue dans le cas de la vigne et de l'arabette en procédant au traitement de ces plantes par des solutions de rhamnolipides R1 et /ou R2 selon les exemples ci-après. La composition en rhamnolipides R1 et /ou R2 utilisée est celle commercialisée sous la dénomination JBR215 par la société américaine Jeneil Biosurfactant Co., LLC : ce produit est une solution aqueuse à une concentration de 15% (v/v) en rhamnolipides R1 et R2.

### Exemple 1

On traite des vitroplants de *Vitis vinifera* (vigne, cépage Chardonnay) par infiltration de deux compositions aqueuses de rhamnolipides R1 et/ou R2, l'une en contenant 0,01% (v/v), et l'autre en contenant 0,1% (v/v); la composition témoin est de l'eau pure.

Ce traitement est réalisé par infiltration de ces compositions dans le mésophylle des vitroplants soit à l'aide d'une seringue, soit sous cloche à vide. On récolte les feuilles 24 heures après l'application du traitement.

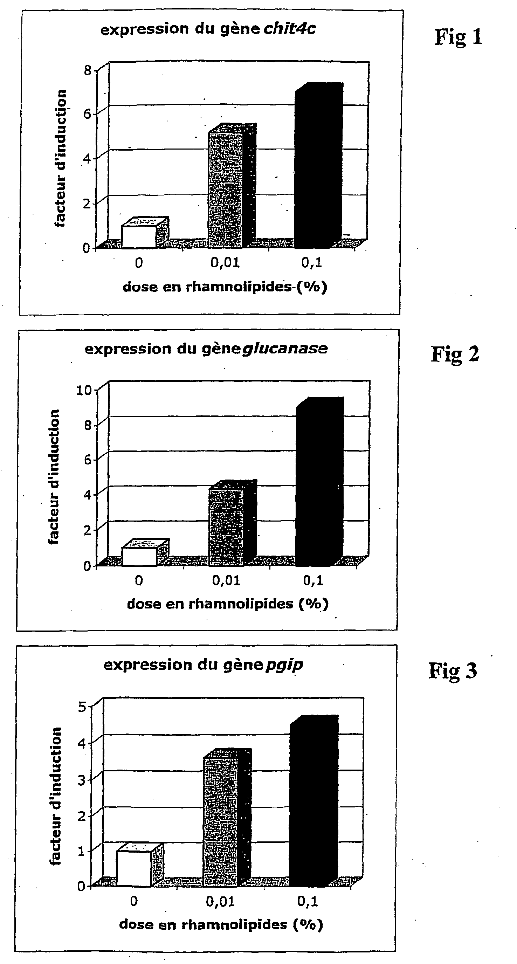

L'induction des réponses de défense, en l'occurrence l'expression des gènes de défense tels que les gènes *chit4-c, glucanase, pgip, pr27, pal et lox* est mesurée par PCR quantitative en temps réel sur les ADNc correspondant aux ARNm extraits des feuilles prélevées à 24h. La méthode d'extraction ainsi que l'analyse par PCR en temps réel sont décrites dans Eur. J. Plant Bio. (2002) 108, 111-120 et Mol. Plant Microb. Interact. (2003) 16, 1118-1128. Ces résultats sont regroupés dans les figures 1 à 6.

Il apparaît qu'une solution de rhamnolipides R1 et/ou R2 à une concentration de 0,01% (v/v) dans l'eau appliquée à des vitroplants de vigne selon le présent exemple, induit de 5 fois l'expression des gènes de défense *chitinases* (*chit-4c*) comme représenté à la figure 1, de plus de 4 fois le gène de *glucanase* (figure 2), de plus de 3 fois le gène *pgip* (figure 3), de plus de 2 fois le gène de *pr27* (figure 4), de plus de 3 fois le gène *pal* (figure 5) et de plus de 2 fois le gène *lox* (figure 6).

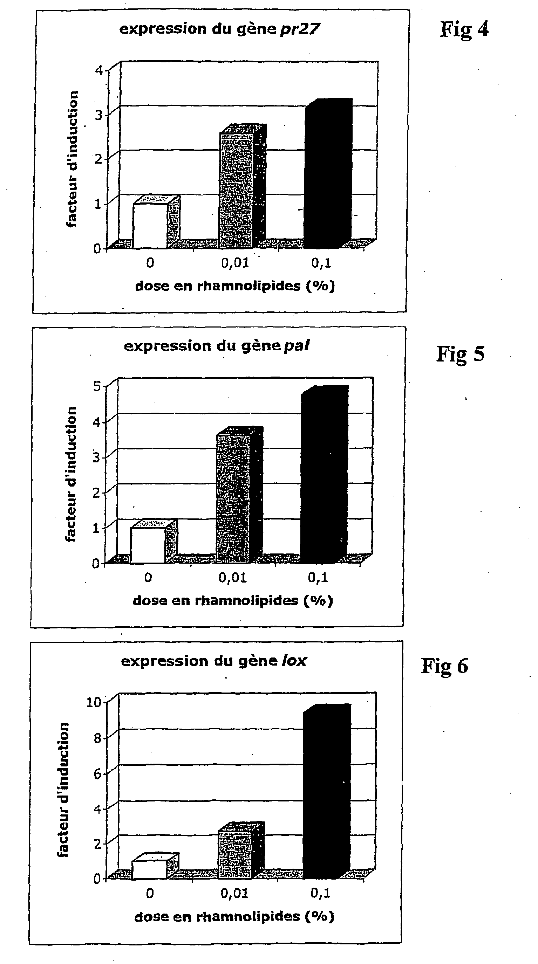

De même, une solution de rhamnolipides R1 et/ou R2 à une concentration de 0,1% (v/v) dans l'eau appliquée à des vitroplants de vigne par infiltration induit de plus de 6 fois l'expression des gènes de défense *chit-4c* comme représenté à la figure 1, de plus de 8 fois le gène *glucanase* (figure 2), de plus de 4 fois le gène *pgip* (figure 3), de plus de 3 fois le gène *pr27*, de plus de 4 fois le gène pal (figure 5), de plus de 8 fois le gène *lox* (figure 6).

### Exemple 2

On traite des vitroplants de *Vitis vinifera* (vigne, cépage chardonnay) par immersion pendant 30 secondes dans une composition aqueuse de rhamnolipides R1 et/ou R2 en contenant 0,1% (v/v) ; la composition témoin est de l'eau pure. Ce traitement par immersion équivaut à une pulvérisation et intéresse le vitroplant dans son entier, tiges et feuilles.

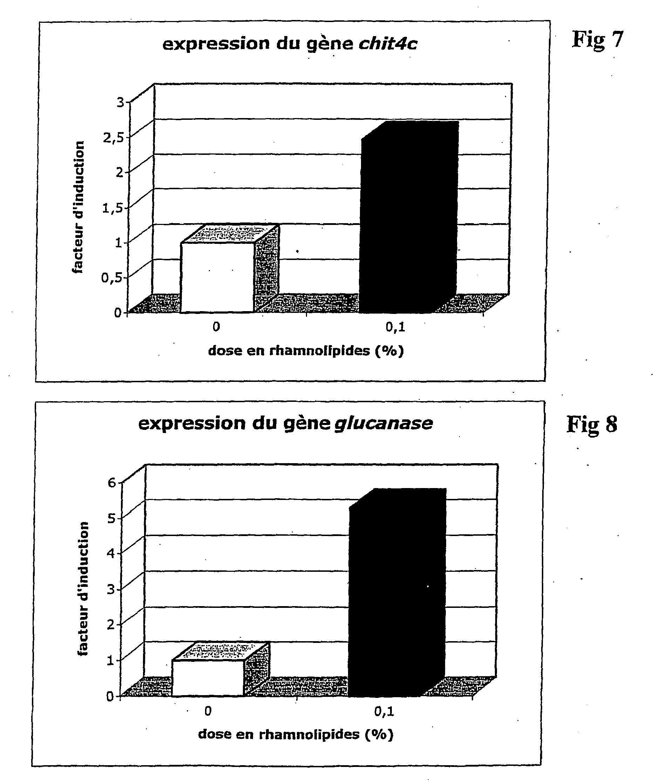

L'induction des réponses de défense, en l'occurrence l'expression des gènes de défense tels que les gènes *chit4-c, glucanase, pgip* et *pr27* est mesurée par PCR quantitative en temps réel sur les ADNc correspondant aux ARNm extraits des feuilles prélevées à 24h. La méthode d'extraction ainsi que l'analyse par PCR en temps réel sont décrites dans Eur. J. Plant Bio. (2002) 108, 111-120 et Mol. Plant Microb. Interact. (2003) 16, 1118-1128. Ces résultats sont regroupés dans les figures 7 à 10.

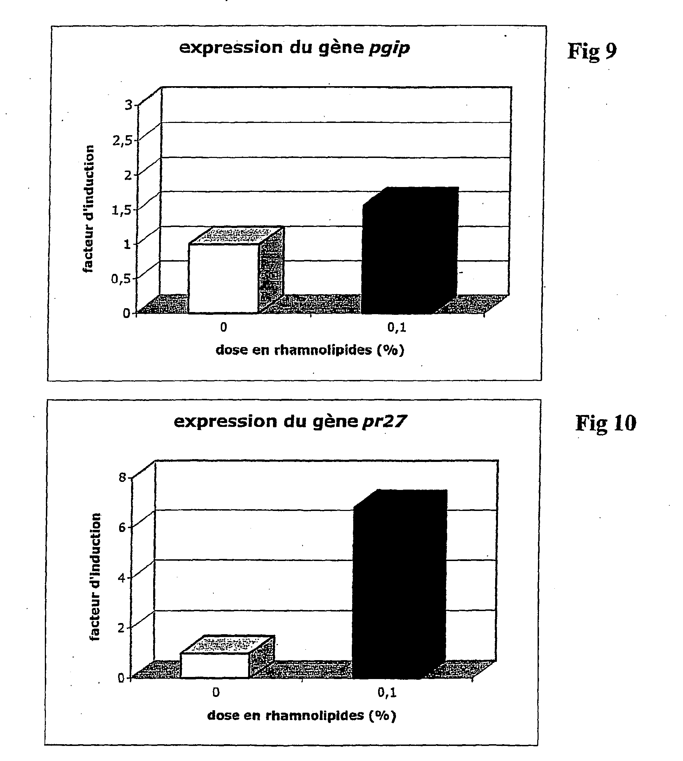

Ainsi une solution rhamnolipides R1 et/ou R2 à une concentration de 0,1% (v/v) dans l'eau appliquée à des vitroplants de vigne selon le présent exemple, induit de 2,5 fois l'expression des gènes de défense *chitinases* (*chit-4c*) comme représenté à la figure 7 et de 5 fois le gène *glucanase* (figure 8), d'environ 1,6 fois le gène *pgip* (figure 9) et de plus de 6 fois le gène pr27 (figure 10).

### Exemple 3

On traite par infiltration des plantes entières *d'Arabidopsis thaliana* (arabette) en pots par des compositions aqueuses comportant 0,1% (v/v) de rhamnolipides R1 et/ou R2.

Ce traitement est réalisé par infiltration de ces compositions dans le mésophylle des plantes soit à l'aide d'une seringue, soit sous cloche à vide. On récolte les feuilles 3 heures, 6 heures et 24 heures après l'application du traitement.

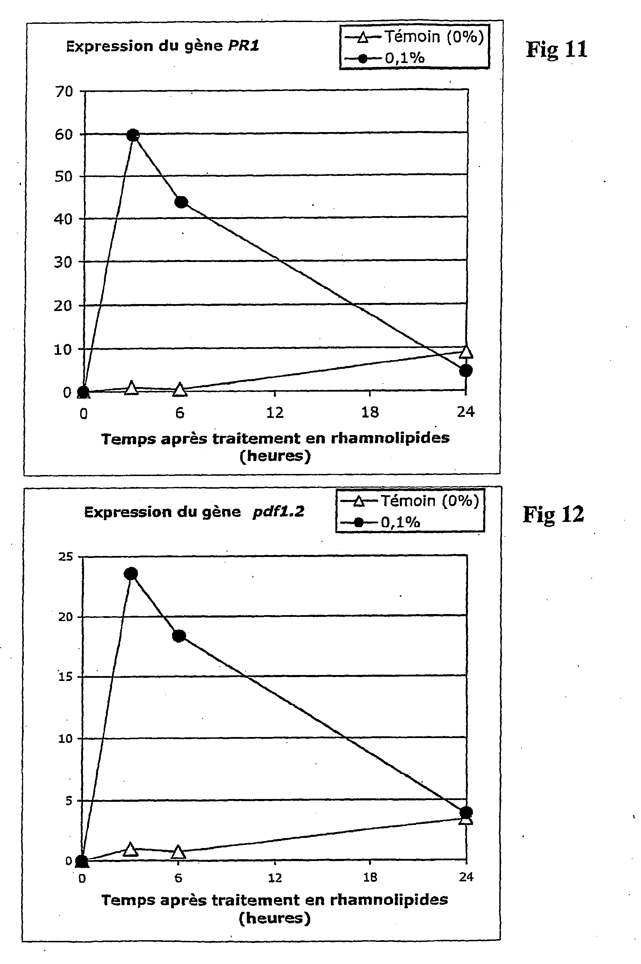

L'induction des réponses de défense, en l'occurrence l'expression des gènes de défense tels que les gènes *pr1* et *pdf1.2* est mesurée par PCR quantitative en temps réel sur les ADNc correspondant aux ARNm extraits des feuilles prélevées aux différents temps mentionnés ci-dessus. La méthode d'extraction ainsi que l'analyse par PCR en temps réel sont décrites dans Eur. J. Plant Bio. (2002) 108, 111-120 et Mol. Plant Microb. Interact. (2003) 16, 1118-1128. Ces résultats sont regroupés dans les figures 11 et 12.

Comme indiqué sur ces figures, une solution de rhamnolipides R1 et/ou R2 à une concentration de 0,1% (v/v) dans l'eau appliquée par infiltration dans des feuilles d'*Arabidopsis thaliana* induit de 60 fois l'expression des gènes de défense *pr1* (figure 11) et de plus de 20 fois le gène de défense *pdf1.2* (figure 12) dès 3 heures après traitement.

Les résultats des exemples 1 à 3 montrent que les rhamnolipides R1 et/ou R2 ont la capacité de stimuler les mécanismes de défense (activité élicitrice) chez les plantes telles que la vigne (*Vitis vinifera*) et l'arabette (*Arabidopsis thaliana*).

### Exemple 4

Des tests de protection ont également été effectués sur la vigne, notamment contre le champignon *Botrytis cinerea*.

Des vitroplants de vignes ont été traités par immersion comme décrit ci-dessus à l'exemple 1 avec deux compositions aqueuses de rhamnolipides R1 et/ou R2, l'une en contenant 0,01 % (v/v), et l'autre en contenant 0,1 % (v/v).

5 jours après ce traitement, les feuilles ont été détachées puis placées faces inférieures vers le haut dans une boite de pétri contenant un disque de papier Wattman humidifié avec de l'eau. Ensuite, elles ont été inoculées avec une pastille de mycélium de *Botrytis cinerea* issue d'une culture de 3 jours sur du milieu V8. Les boites sont incubées à 26°C et les résultats de l'infection sont visualisés 96 heures après inoculation avec le champignon.

Il a été ainsi constaté que l'infection est stoppée dès les premières heures suivant l'inoculation. A 96 heures après infection, aucun mycélium n'est visible sur les échantillons traités avec les compositions aqueuses de rhamnolipides R1 et/ou R2 à 0,01 et 0,1% alors que le mycélium a complètement colonisé les feuilles lorsqu'il n'y a pas eu de traitement avec les rhamnolipides R1 et/ou R2.

Des résultats complémentaires obtenus sur croissance mycélienne sur boite en milieu V8 montrent que, de plus, les rhamnolipides R1 et/ou R2 inhibent la croissance fongique dès 0,01% et préférentiellement à 0,1% avec plus de 70% d'inhibition de croissance radiale.

Ces résultats montrent que les rhamnolipides R1 et/ou R2 protègent donc efficacement la vigne contre *Botrytis cinerea*.

Ces exemples tendent à prouver à l'homme de métier que de telles compositions de rhamnolipides R1 et/ou R2 sont efficaces sur les plantes agronomiquement utiles et les plantes modèles.

## Revendications

1. - Utilisation de rhamnolipides R1 et/ou R2 en tant qu'agent de stimulation des réactions de défense naturelles des plantes.

2. - Procédé pour stimuler des réactions de défense naturelles des plantes, **caractérisé par le fait que** l'on applique sur les plantes à traiter une composition aqueuse comportant une concentration d'au moins 0,01% (v/v) de rhamnolipides R1 et/ou R2.

3. - Procédé selon la revendication 2, **caractérisé par le fait que** l'on applique sur les plantes à traiter une composition aqueuse comportant une concentration d'au moins 0,1 % (v/v) de rhamnolipides R1 et/ou R2.

## Claims

1. Use of rhamnolipids R1 and/or R2 as an agent for stimulating natural defence reactions of plants.

2. A method for stimulating natural defence reactions of plants, **characterised in that** an aqueous composition comprising a concentration of at least 0,01% (v/v) of rhamnolipids R1 and/or R2 is applied to the plants to be treated.

3. A method according to claim 2, **characterised in that** an aqueous composition comprising a concentration of at least 0.1% (v/v) of rhamnolipids R1 and/or R2 is applied to the plants to be treated.

## Patentansprüche

1. Verwendung von Rhamnolipiden R1 und/oder R2 als Wirkstoff zur Stimulation von natürlichen Abwehrreaktionen von Pflanzen.

2. Verfahren zur Stimulierung von natürlichen Abwehrreaktionen von Pflanzen, **dadurch gekennzeichnet, dass** eine wässrige Zusammensetzung, aufweisend eine Konzentration der Rhamnolipide R1 und/oder R2 von mindestens 0,01% (v/v), auf die zu behandelnden Pflanzen appliziert wird.

3. Verfahren nach Anspruch 2, **dadurch gekennzeichnet, dass** eine wässrige Zusammensetzung, aufweisend eine Konzentration der Rhamnolipide R1 und/oder R2 von mindestens 0,1% (v/v), auf die zu behandelnden Pflanzen appliziert wird.
